# EUROPÄISCHE PATENTSCHRIFT

(11) **EP 1 031 455 B1**
(45) Veröffentlichungstag und Bekanntmachung des Hinweises auf die Patenterteilung: **19.07.2006**
(21) Anmeldenummer: 00101217.8
(22) Anmeldetag: 21.01.2000
(51) Int. Cl.: B60K 35/00

(54) **Anzeigeeinrichtung für ein Kraftfahrzeug und Verfahren zu ihrem Betrieb**
Indicator arrangement for a motor vehicle and method of operating the same
Arrangement indicateur pour automobile et procédé pour sa mise en oeuvre

(30) Priorität: 25.02.1999 DE 19908136
(43) Veröffentlichungstag der Anmeldung: 30.08.2000
(73) Patentinhaber: Volkswagen Aktiengesellschaft, 38436 Wolfsburg (DE)
(72) Erfinder: Bachorski, Tomasz, 59077 Hamm (DE); Stephan, Jörg, 38550 Isenbüttel (DE)

(56) Entgegenhaltungen:
- EP-A- 0 846 588
- DE-A- 3 808 826
- US-A- 5 295 049

## Beschreibung

Die Erfindung betrifft ein Verfahren zum Betrieb einer Anzeigeeinrichtung bei einem Kraftfahrzeug sowie eine Anzeigeeinrichtung, insbesondere eine Kombi-Anzeigeeinrichtung selbst, gemäß Oberbegriff der Patentansprüche 1 und 5.

Anzeigeeinrichtungen für Kraftfahrzeuge müssen übersichtlich und gut strukturiert sein, und darüber hinaus maximale Information geben. In einem sog. Kombi-Instrument werden eine Mehrzahl von Einzelanzeigen installiert. Es sind dies diejenigen Anzeigen, die der Fahrzeugführer während des Fahrbetriebes im wesentlichen benötigt. Mit ständig steigenden Anforderungen, beispielsweise bei der Hinzunahme von modernen Verkehrsleitsystemen bedarf es dennoch einer gut übersichtlichen Plazierung.

Darüber hinaus ist auch bekannt, nunmehr vermehrt elektronische Displayanzeigen zu verwenden. Oftmals werden dabei Analoganzeigen im sog. Kombi-Instrument mit elektronischen Einzelanzeigen kombiniert. Um hierbei eine gute Ablesbarkeit zu erreichen, bedarf es aber einer entsprechend optisch aufbereiteten Darstellung. Das heißt, bei allen einzelnen Instrumenten, auch bei Kombination analoger mit elektronischen Anzeigen, muß eine gute Abstimmung der einzelnen Anzeigen aufeinander gewährleistet sein.

Darüber hinaus ist vielfach das Problem bekannt, daß die bei den Anzeigen verwendeten Zeigerelemente in der Nullstellung übrige Anzeigeelemente verdecken. Dazu ist es wiederum bekannt, Anzeigeinstrumente so zu gestalten, daß bei Abschalten bzw. Außerbetriebnehmen des Fahrzeuges die Zeiger in eine Neutralstellung hinter einer Blende abgesenkt werden. Bei Inbetriebnahme des Fahrzeuges wird beispielsweise durch Einschalten der Zündeinrichtung der Zeiger aus der Neutralstellung wieder in die Nullstellung gebracht, womit die Betriebsbereitschaft des Anzeigeinstrumentes gekennzeichnet wird.

Eine solche Einrichtung ist aus der DE 38 08 826 C2 bekannt. Dort wird ein Kombi-Instrument dargestellt, welches ausschließlich aus analogen Anzeigeelementen besteht. Der Zeiger einer oder mehrerer Anzeigen dieser Art wird durch Abschalten der Zündanlage hinter einer Blende abgesenkt und bei Einschalten derselben aus dieser wieder in die Nullstellung der Anzeige gebracht.

Eine ähnliche Einrichtung ist aus der US 5 295 049 bekannt. Die analoge Anzeigeeinrichtung weist ein analoges Zeigerelement auf, welches eine Motordrehzahl in einer Rundskala anzeigt. Die komplette Skala ist dabei ausgehend von einer Nullstellung bis hin zu einem Maximalwert sichtbar dargestellt. Das analoge Zeigerelement wird bei Betriebsabschaltung des Kraftfahrzeugs in eine separate Neutralstellung bewegt, welche nicht der Nullstellung der Rundskala entspricht. Die Neutralstellung ist dabei unterhalb der Nullstellung angeordnet, wobei das analoge Zeigerelement in dieser Neutralstellung von einer undurchsichtigen Platte bedeckt ist. Die undurchsichtige Platte ist dabei ohne jegliche zusätzliche Funktion.

In beiden Fällen sind mechanische Blenden vorgesehen, hinter denen der mechanische und körperhafte Zeiger des Anzeigeinstrumentes abgesenkt wird. Nachteilig ist bei dieser Ausführungsform die ausschließliche Verwendung für analoge Anzeigeinstrumente mit mechanischen Zeigerelementen.

Der Erfindung liegt somit die Aufgabe zugrunde, auf geeignete Weise die Betriebsbereitschaft eines vollelektronischen Anzeigeinstrumentes, insbesondere eines Kombi-Anzeigeinstrumentes bei Kraftfahrzeugen, zu realisieren.

Die gestellte Aufgabe wird bei einem Verfahren zum Betrieb einer Anzeigeeinrichtung sowie bei einer Anzeigeeinrichtung selbst durch die kennzeichnenden Merkmale der Patentansprüche 1 und 5 gelöst.

Weitere vorteilhafte Ausgestaltungen sowohl hinsichtlich des erfindungsgemäßen Verfahrens als auch hinsichtlich der erfindungsgemäßen Anzeigeeinrichtung sind in den übrigen abhängigen Ansprüchen dargestellt.

Kern der Erfindung ist hierbei eine geeignete Betriebsbereitschaftsanzeige für voll elektronische Displayanzeige-Instrumentierungen für Kraftfahrzeuge zu gewährleisten. Hierbei ist das Anzeigefeld sowie auch der Zeiger selbst elektronisch generiert, d. h. der Zeiger existiert nicht als mechanisches, körperhaftes Element, sondern wird auf dem besagten Display angezeigt.

Eine oben bereits beschriebene Maßgabe ist eine gute und kompakte Durchinstrumentierung eines Kombi-Instrumentes bei gleichzeitig guter Überblickbarkeit. Von daher wird hier auf erfindungsgemäße Weise das Zeigerelement nicht imaginär hinter einer Blende versenkt, sondern das Zeigerelement scheint hinter einem Anzeigefeld zu verschwinden. Dieses Anzeigefeld deckt sich somit mit der imaginären Blendenebene und wirkt dem im oben bereits zitierten Stand der Technik dargelegten optischen Eindruck entgegen, jedoch durch eine aktive Anzeige, wie beispielsweise Motortemperatur oder Tankfüllstand. Somit ist das besagte zusätzliche Anzeigefeld kein Anzeigefeld, in dem das Zeigerelement dargestellt werden soll, sondern in dem eine eigene Anzeigendarstellung realisiert ist.

In einer Anzeige der Anzeigeeinrichtung kann ein weiteres Anzeigefeld derart integriert sein, daß dieses weitere Anzeigefeld bzw. Anzeigeelement die Nullstellung des Zeigerelements verdeckt.

Bei Inbetriebnahme des Fahrzeuges, beispielsweise durch Einstecken des Zündschlüssels oder Betätigung der Zündanlage, wird die Zeigerdarstellung generiert, und der Zeiger erreicht die neutrale Nullposition. Hierdurch wird die Betriebsbereitschaft des elektronischen Anzeigeinstrumentes auf wirkungsvolle Weise dargestellt.

Die Betriebsbereitschaftskennzeichnung kann sich jedoch auch auf die gesamte technische Situation des Fahrzeuges beziehen, also auch davon abhängig sein, ob beispielsweise die Bordelektronik einen Fehler meldet oder nicht. Die Nichtbetriebsbereitschaft würde sich dann durch eine Nichteinnahme der Nullstellung des Zeigerelementes optisch kenntlich machen.

Wird das Fahrzeug wieder außer Betrieb genommen, so kehrt das Zeigerelement quasi imaginär wieder in die besagte Neutralstellung, also in die durch das Anzeigenfeld verdeckte Position zurück.

Die Erfindung ist in der Zeichnung dargestellt und nachfolgend näher beschrieben.

Es zeigt:
- Figur 1:: Kombi-Instrument bei abgeschalteter Zündanlage.
- Figur 2:: Kombi-Instrument bei eingeschalteter Zündanlage.

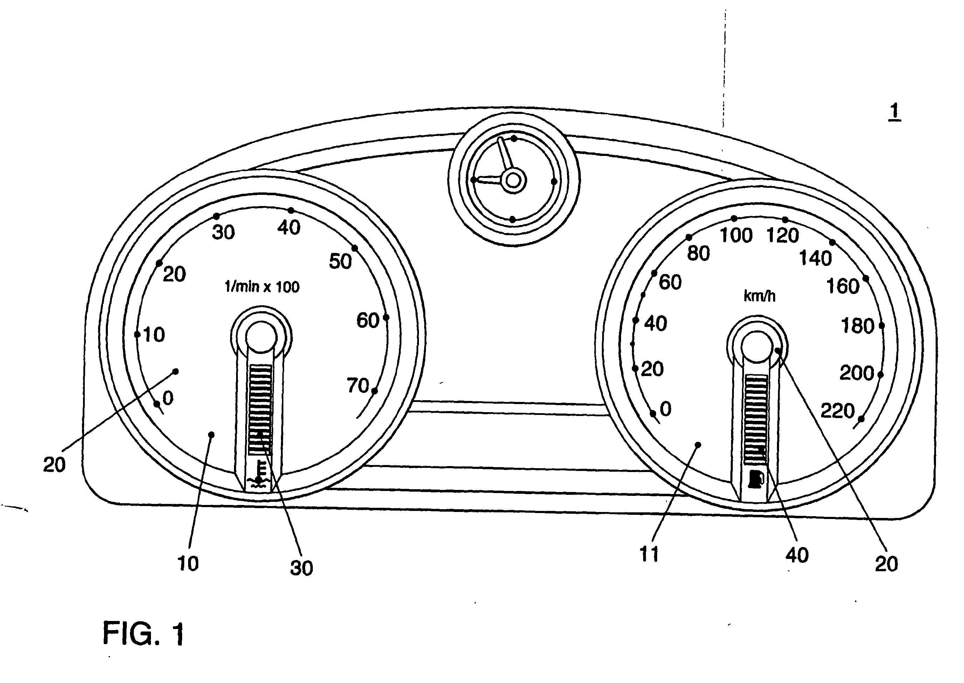

Figur 1 zeigt das erfindungsgemäße Kombi-Instrument 1 bei ausgeschalteter Zündanlage. Das gesamte Kombi-Instrument besteht aus mehreren Anzeigezonen oder Anzeigefeldern. So ist beispielsweise eine Drehzahlanzeige 10 sowie eine Geschwindigkeitsanzeige 11 vorgesehen, und dazwischen ist eine Uhr angeordnet. Die Geschwindigkeitsanzeige 11 und die Drehzahlanzeige 10 sind als Rundinstrumente dargestellt und die verbleibende Displayfläche zwischen beiden wird beispielsweise für das Navigationssystem verwendet. Im unteren Randbereich des Displayfeldes sind Angaben wie Außentemperatur, Kilometerstand, Tageskilometerzähler und Getriebegangwahl darstellbar.

Die Bezifferung sowie die Anzeigefläche der Geschwindigkeitsanzeige 11 sowie auch der Drehzahlanzeige 10 sind vollelektronisch, werden somit als Bildschirminformationen dargestellt. Weiterhin dargestellt ist ein Zentralbereich 20 in den beiden Rundinstrumenten
10, 11. Von dort aus nach unten abgehend ist eine Säulen- oder Balkenanzeige 30, 40 eingebracht. Diese Säulen- bzw. Balkenanzeige wird dabei ebenfalls elektronisch generiert und besteht somit lediglich aus einem für sich separiert gekennzeichneten Anzeigefeld. In der Drehzahlanzeige 10 ist im besagten Anzeigefeld die Kühlwassertemperaturanzeige 30 integriert und in der Geschwindigkeitsanzeige 11 die Tankfüllstandsanzeige 40. Die entsprechende Anzeige von Temperatur und Tankinhalt erfolgt dabei über die Generierung entsprechend farblich markierter oder farblich abgestufter Balken.

Scheinbar hinter diesem Anzeigefeld ist das elektronisch generierte Zeigerelement 50 der jeweiligen Anzeige verdeckt angeordnet. Da jedoch auch der Zeiger 50 ggf. elektronisch generierbar ist, ist diese Verdeckung nur imaginär. Für den Fahrzeugführer ist aber sichtbar, daß das Zeigerelement 50 quasi in einer von der Nullage der jeweiligen Anzeige verschiedene Neutrallage ist. Dies kennzeichnet den Zustand des außer Betrieb genommenen Fahrzeuges bzw. der ausgeschalteten Zündung.

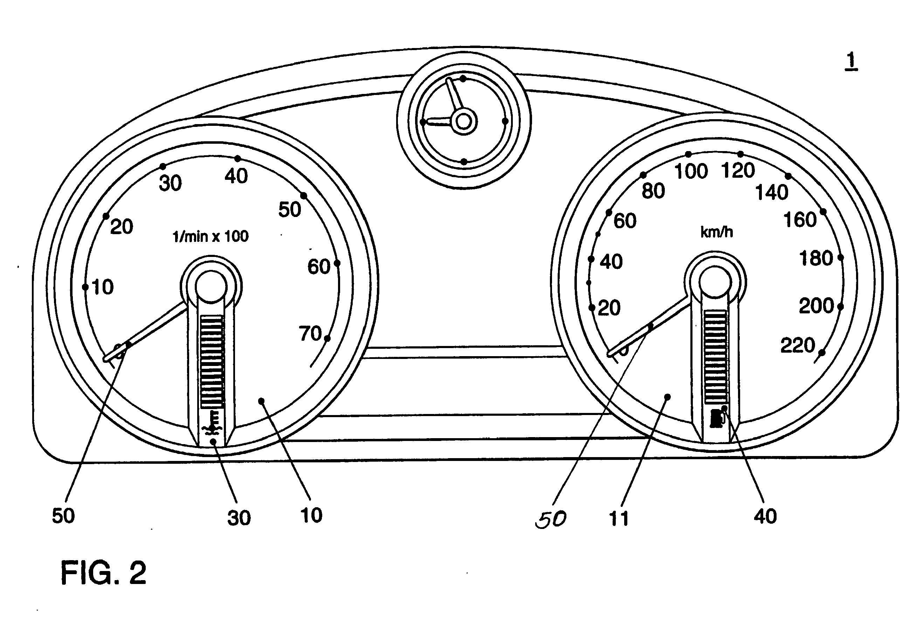

Figur 2 zeigt den Zustand bei eingeschalteter Zündanlage. Hierbei ist nun das Zeigerelement 50 sichtbar und kehrt von der in Figur 1 dargestellten Neutrallage in die Figur 2 nunmehr dargestellten Nullage zurück und damit in den betriebsbereiten Zustand. Von dort aus wird die Zeigerbewegung je nach gemessenen Fahrwerten entsprechend dargestellt, wobei in diesem Ausführungsbeispiel die gesamte Anzeige nebst Zeigerelement als elektronische Displayanzeige generiert wird.

Eine gleichartige Systematik kann für alle übrigen Anzeigeelemente des Kombiistrumentes gelten.

## Patentansprüche

1. Verfahren zum Betrieb einer Anzeigeeinrichtung bei einem Kraftfahrzeug, wobei ein Zeigerelement bzw. Zeigerelemente (50) bei Betriebsabschaltung des Fahrzeuges in eine separate Neutralstellung geht bzw. gehen, die nicht die Anzeigen-Nullstellung ist und daß bei Inbetriebnahme die Zeigerelemente (50) in Nullstellung zurückkehren,
**dadurch gekennzeichnet,**
**daß** die Neutralstellung von einem weiteren Anzeigeelement oder Anzeigefeld (30, 40) abgedeckt wird.

2. Verfahren nach Anspruch 1,
**dadurch gekennzeichnet,**
**daß** die Neutralstellung des Zeigerelementes bzw. der Zeigerelemente (50) nach bzw. durch Abziehen des Zündschlüssels aus dem Zündschloß erreicht wird.

3. Verfahren nach einem der vorhergehenden Ansprüche ,
**dadurch gekennzeichnet,**
**daß** die Nullstellung des Zeigerelementes bzw. der Zeigerelemente (50) nach bzw. durch Einstecken des Zündschlüssels in das Zündschloß erreicht wird.

4. Verfahren nach einem der vorhergehenden Ansprüche,
**dadurch gekennzeichnet,**
**daß** das Zeigerelement bzw. die Zeigerelemente (50) in der Neutralstellung verdeckt ist bzw. sind.

5. Anzeigeeinrichtung für Kraftfahrzeuge, insbesondere Kombianzeigeeinrichtung, wobei das Zeigerelement bzw. die Zeigerelemente (50) bei Betriebsabschaltung des Fahrzeuges in eine separate Neutralstellung bringbar ist bzw. sind, die nicht die Anzeigen-Nullstellung ist und daß bei Inbetriebnahme die Zeigerelemente (50) in Nullstellung zurückbringbar sind
**dadurch gekennzeichnet,**
**daß** die Neutralstellung von einem weiteren Anzeigeelement oder Anzeigefeld (30, 40) abdeckbar ist.

6. Anzeigeeinrichtung nach Anspruch 5,
**dadurch gekennzeichnet,**
**daß** in der Anzeige (10, 11) jeweils ein weiteres Anzeigefeld (30, 40) derart integriert ist, daß dieses weitere Anzeigeelement bzw. Anzeigefeld (30, 40) die Nullstellung des Zeigerelementes (50) verdeckt.

7. Anzeigeeinrichtung nach Anspruch 5 oder 6,
**dadurch gekennzeichnet,**
**daß** die Anzeige (10, 11) eine Displayanzeige ist.

8. Anzeigeeinrichtung nach Anspruch 7,
**dadurch gekennzeichnet,**
**daß** das Zeigerelement (50) elektronisch im Display generierbar ist.

## Claims

1. Method of operating an indicator device in a motor vehicle, a pointer element or pointer elements (50) going into a separate neutral position, which is not the zero position of the indicator, when the vehicle is deactivated, and the pointer elements (50) returning to the zero position when the vehicle is activated, **characterized in that** the neutral position is covered by a further indicator element or indicator field (30, 40).

2. Method according to Claim 1, **characterized in that** the neutral position of the pointer element or pointer elements (50) is reached after the ignition key is pulled out of the ignition lock, or by pulling the ignition key out of the ignition lock.

3. Method according to one of the preceding claims, **characterized in that** the zero position of the pointer element or pointer elements (50) is reached after the ignition key is inserted into the ignition lock, or by inserting the ignition key into the ignition.lock.

4. Method according to one of the preceding claims, **characterized in that** the pointer element or pointer elements (50) is/are covered in the neutral position.

5. Indicator device for motor vehicles, in particular a combination indicator device, it being possible to place the pointer element or pointer elements (50) in a separate neutral position, which is not the zero position of the indicator, when the vehicle is deactivated, and it being possible to return the pointer elements (50) to the zero position when the vehicle is activated, **characterized in that** the neutral position can be covered by a further indicator element or indicator field (30, 40).

6. Indicator device according to Claim 5, **characterized in that** in each case a further indicator field (30, 40) is integrated into the display (10, 11) in such a way that this further indicator element or indicator field (30, 40) covers the zero position of the pointer element (50).

7. Indicator device according to Claim 5 or 6, **characterized in that** the indicator (10, 11) is a display indicator.

8. Indicator device according to Claim 7, **characterized in that** the pointer element (50) can be generated electronically in the display.

## Revendications

1. Procédé de fonctionnement d'un équipement indicateur d'un véhicule automobile, un élément ou plusieurs éléments d'aiguille (50) se déplaçant, en cas d'arrêt de fonctionnement du véhicule, dans une position neutre distincte qui n'est pas la position neutre de l'indicateur et les éléments d'aiguille (50) reprenant la position neutre lors de la mise en route, **caractérisé en ce que** la position neutre est couverte par un autre élément indicateur ou zone indicatrice (30, 40).

2. Procédé selon la revendication 1 **caractérisé en ce que** la position neutre de l'élément ou des éléments d'aiguille (50) est atteinte après avoir retiré ou en retirant la clé de contact de la serrure de contact.

3. Procédé selon l'une quelconque des revendications précédentes **caractérisé en ce que** la position neutre de l'élément ou des éléments d'aiguille (50) est atteinte après avoir introduit ou en introduisant la clé de contact dans la serrure de contact.

4. Procédé selon l'une quelconque des revendications précédentes, **caractérisé en ce que** l'élément ou les éléments d'aiguille (50) sont cachés en position neutre.

5. Équipement indicateur d'un véhicule automobile, en particulier équipement indicateur combiné, le ou les éléments d'aiguille (50) pouvant être amenés, en cas d'arrêt de fonctionnement du véhicule, dans une position neutre distincte qui n'est pas la position neutre de l'indicateur et les éléments d'aiguille (50) pouvant être ramenés en position neutre lors de la mise en route, **caractérisé en ce que** la position neutre peut être couverte par un autre élément indicateur ou zone indicatrice (30, 40).

6. Équipement indicateur selon la revendication 5, **caractérisé en ce que**, dans l'indicateur (10, 11), une autre zone indicatrice (30, 40) est respectivement intégrée de manière telle que cet autre élément indicateur ou zone indicatrice (30, 40) couvre la position neutre de l'élément d'aiguille (50).

7. Équipement indicateur selon la revendication 5 ou 6, **caractérisé en ce que** l'indicateur (10, 11) est un affichage.

8. Équipement indicateur selon la revendication 7, **caractérisé en ce que** l'élément d'aiguille (50) peut être généré électroniquement sur l'affichage.
